# EUROPEAN PATENT SPECIFICATION

(11) **EP 2 841 670 B1**
(45) Date of publication and mention of the grant of the patent: **11.08.2021**
(21) Application number: 13720127.3
(22) Date of filing: 24.04.2013
(51) Int. Cl.: E06B 3/52, E05C 19/00, A47B 31/00, B64D 11/04

(54) **DEVICE FOR ACCOMMODATING OBJECTS AND TRANSPORTATION MEANS COMPRISING SUCH A DEVICE**
VORRICHTUNG ZUR UNTERBRINGUNG VON GEGENSTÄNDEN UND TRANSPORTMITTEL MIT EINER SOLCHEN VORRICHTUNG
DISPOSITIF POUR LOGER DES OBJETS ET MOYEN DE TRANSPORT COMPRENANT UN TEL DISPOSITIF

(30) Priority: 24.04.2012 NL 2008693
(43) Date of publication of application: 04.03.2015
(73) Proprietor: Safran Cabin Catering B.V., 1812 RL Alkmaar (NL)
(72) Inventor: van Loon, Laurentius Petrus Joseph, 1774 AK Slootdorp (NL)
(74) Representative: Gevers Patents
(86) International application number: PCT/NL2013/050307
(87) International publication number: WO 2013/162364

(56) References cited:
- EP-A1- 0 429 813
- DE-B3-102008 060 665
- None

## Description

### TECHNICAL FIELD

The invention relates to a device for accommodating objects, in particular for use in an airplane, comprising a housing and a door which is pivotable about a pivot axis between an open position and a closed position, wherein the door, in its closed position, is movable in a direction which extends substantially parallel to the pivot axis between a locked position and an unlocked position, the door, in its locked position, being locked in the closed position, and the door, in its unlocked position, being pivotable about the pivot axis from the closed to the open position. The invention further relates to transportation means for transporting a plurality of passengers, comprising at least one such device for accommodating objects.

### STATE OF THE ART

Such devices for use in airplanes are known from the prior art. The device may be a trolley which can be moved along the aisle. In the airline industry, such a trolley is also referred to as a catering trolley. A trolley is used by cabin staff to take drinks, meals or duty-free articles to the seats of passengers in an airplane. The invention relates in particular to trolleys of this type. In this description, the term trolley may be used to refer to a trolley for use in airplanes, as well as in any other kind of means for transportation, such as trains and ships, or in hospitals.

A service trolley has a particular shape. Usually, a service trolley is narrow, i.e. the height to width ratio of the service trolley is quite large, for example a factor of 2 or more. Furthermore, a service trolley is usually elongate - in which case the bottom wall is rectangular, while the side walls are connected to the long sides of the bottom wall. The side walls are located on a longitudinal side of the housing.

The device may also be a so-called galley, i.e. a kitchen on board an airplane or other means of transportation. A galley has storage cupboards which can each be closed off by a door.

An airplane trolley is known from NL1019366. This trolley has a well-known lock, which is recessed into the door. In the front side of the door, a shallow cavity is provided. In this cavity a flat handle is accommodated, which can hinge in the plane of the door between a locked position and an unlocked position. Via a transmission mechanism in the door, this handle is connected to a latch which is pushed out or pulled in relative to an edge of the door. The transmission mechanism is generally a mechanism of rods. The known lock is relatively heavy, mainly as a result of the transmission mechanism which is incorporated in the door. Any increase in the total weight of the airplane results in an appreciable increase in fuel consumption. However, the aim of the airlines which operate the airplanes obviously is to achieve a trolley with a weight which is as low as possible.

An improved trolley is disclosed in EP1858367. According to EP1858367 a device for accommodating objects, in particular for use in an airplane, comprising a housing which has an access opening, as well as a door which is connected to the housing by at least one hinge so as to be pivotable between an open position and a closed position, which hinge determines a pivot axis for pivoting the door, wherein, in its closed position, the door is movable in a direction which extends substantially parallel to the pivot axis between a locked position and an unlocked position, the door, in its locked position, being locked relative to the housing, and the door, in its unlocked position, being pivotable about the pivot axis.

In the locked position, the trolley door cannot pivot relative to the housing from the closed position, while in the unlocked position, pivoting about the pivot axis is possible. During normal use of the trolley or galley, the pivot axis runs substantially along a vertical. In order to lock the door of the trolley, the user simply swings the door from the open position in the direction of the closed position, and lifts the lightweight door of the trolley slightly near this closed position. The door can be swung further into its closed position. The user can then release the door, as a result of which the door engages in the locked position. The force of gravity exerted on the door will then counteract a movement out of this position. The door can be opened by slightly lifting the door until it reaches the unlocked position and pivoting the door to its opened position. Thus, the locking is carried out using the displacement of the door itself.

Such a door mechanisms does not require a separate handle which can be moved between two positions. In addition the relatively heavy transmission mechanism in the door and the latch can also be omitted. Consequently, the device or trolley has a reduced weight. A further advantage is the fact that the lock of the trolley is simpler to operate. As the trolley cannot have any protruding parts, the known handle for locking the door is of flat design. This handle is located in a shallow cavity at the front of the door. Yet a further advantage of such a door mechanism is the improved reliability of the lock. In contrast to the transmission mechanism in the door according to NL1019366, the lock according to EP1858367 has no moving parts. As a result, this lock is relatively unsusceptible to malfunction. Document DE 10 2008 060665 B3 discloses an airplane trolley. Document EP 0 429 813 A1 discloses an autoclave door.

Trolleys and galleys for use in airplanes need to comply with strict safety requirements.

One important certification test specifies that a completely filled airplane trolley has to be able to withstand a force of 9g, where g is the gravitational acceleration. This means that while retarding forces of 9g are acting on the trolley, the contents present in the housing have to remain inside the trolley and thus, the door should remain closed. When a sudden change of speed of the airplane occurs during an emergency situation, such as a sudden drop in speed or descent, the contents of the trolley must not be released. For the safety on board the airplane, the contents of the trolley must not become flying projectiles in the airplane's cabin.

The forces which the contents of the housing exert on the door in the closed position during an acceleration of 9g are usually the critical design parameters. If the contents of the trolley have a mass of 80 kg, the forces acting on the door are thus approximately 800 kg. This has to be taken into account with a lock for the door in an airplane trolley. In any case, the lock of an airplane trolley must meet the safety requirements. In this regard, trolleys of this type are subject to a rigorous system of certification.

### SHORT DESCRIPTION

It is an object of the invention to provide a device for accommodating objects, in particular for use in an airplane, which has an improved strength.

According to an aspect there is provided a device for accommodating objects according to claim 1.

The locking edge of the door is the edge of the door parallel to and remote from the pivot axis.

This provides an improved way to lock the door in its closed position. By using the locking edge of the door in cooperation with the door post, locking can be achieved in a reliable and strong way.

The locking edge comprises a plurality of engagement members and the door post comprises a plurality of engagement members which engage with respective engagement members of the locking edge in the locked position.

By providing engagement members on the locking edge and the door post, the locking edge and the door post can engage with each other. By providing a plurality of engagement members, a reliable and strong engagement can be achieved as forces are distributed over the plurality of engagement members.

According to an embodiment the plurality of engagement members of the locking edge and the plurality of engagement members of the door post engage with each other in a direction substantially perpendicular to the pivot axis.

The engagement members are designed to only engage in a direction perpendicular to the pivot axis, such that movement of the door in the direction which extends substantially parallel to the pivot axis between the locked and the unlocked position is allowed. The direction perpendicular to the pivot axis is thus in the pivot direction of the door. This ensures that the door is safely locked.

According to an embodiment the plurality of engagement members of the door post do not engage with respective engagement members of the locking edge in the unlocked position.

This allows moving the door from the closed to the open position in the unlocked position.

According to an embodiment the plurality of engagement members of the door post and the engagement members of the locking edge are static engagement members.

By providing static engagement members, i.e. engagement members without moving parts, the device can be made in a light-weighted manner, without the need for moving parts and movable door handles to operate the engagement members. This also contributes to the robustness of the device. The engagement members may be formed by protrusions.

According to an embodiment the door is moveable between the locked position and the unlocked position in the direction which extends substantially parallel to the pivot axis over an unlocking distance, and wherein, in the locked position, the plurality of engagement members of the locking edge engage with respective engagement members of the door post along respective engagement distances in the direction which extends substantially parallel to the pivot axis, the engagement distances being smaller than the unlocking distances.

This way it is ensured that the engagement members engage and thus lock the door in the locked position but do no longer engage with each other when the door is moved to its unlocked position.

According to an embodiment the plurality of engagement members of the locking edge and the plurality of engagement members of the door post are distributed along the length of the locking edge and door post respectively.

This ensures that maximum engagement strength can be obtained, as a plurality of engagement members can be provided, distributed along the entire length of the locking edge and door post, and not only in a relatively small portion thereof.

The number of engagement members provided along the locking edge of the door and the door post may be at least five, preferably at least seven and more preferably at ten or even twenty. Such numbers provide a reliable locking wherein forces are evenly distributed along the length of the edge.

The engagement members are preferably equally spaced to use the entire available length in an optimum way.

According to an embodiment the plurality of engagement members of the door and the door post are formed by protrusions that are alternatingly positioned in the direction of the pivot axis in the unlocked position and are at least partially overlapping in the direction of the pivot axis in the locked position.

Such an embodiment provides reliable and easy to manufacture engagement members.

According to the invention the plurality of engagement members of the door and the door post are formed by hook-shaped protrusions, wherein the hook direction of the engagement members of the door are opposite to the hook direction of the engagement members of the door post.

The hook directions are both in the same plane, such that the oppositely directed hook-shaped protrusions engage. The plane in which the hook directions are positioned is substantially perpendicular to the pivot axis.

In the invention, lower edges of the engagement members of the door and/or top edges of the engagement members of the door post are slanted to facilitate closing of the door. The slanting edges help to lift the door when closing the door.

According to an embodiment the locking edge comprises a plurality of equally spaced protrusions and the door post comprises a plurality of equally spaced protrusions, wherein the protrusions of the locking edge engage with the protrusions of the door post in the locked position to lock the door in its closed position and allow movement of the door in the direction which extends substantially parallel to the pivot axis between the locked and the unlocked position.

The protrusions form the engagement members described above.

According to an embodiment the device is a trolley.

According to a further aspect, there is provided a galley for use in an airplane, comprising at least one device as described above.

According to a further aspect of the invention, there are provided transportation means for transporting a plurality of passengers, comprising at least one device for accommodating objects as described above. The transport means is, for example, an airplane, a train or a vessel. The device for accommodating objects may be a galley or a trolley.

### SHORT DESCRIPTION OF THE DRAWINGS

Embodiments will now be described, by way of example only, with reference to the accompanying schematic drawings in which corresponding reference symbols indicate corresponding parts, and in which:

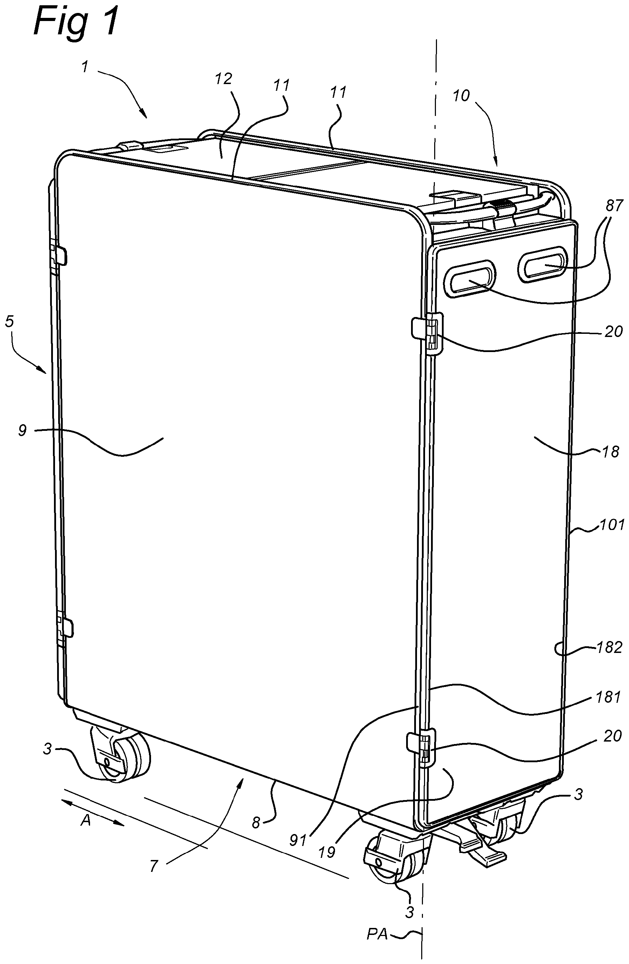

- Figure 1 schematically depicts a perspective view of a trolley according to an embodiment,
- Fig.'s. 2a, 2b schematically show a door according to an embodiment,
- Fig.'s 3a - 3c schematically show a detail of door according to an embodiment.

### DETAILED DESCRIPTION

A device for accommodating objects, in particular for use in an airplane, will now be described in more detail with reference to the figures. The device may be part of a galley or may be a trolley. By way of example, an embodiment of a trolley will be described with reference to the figures.

Fig. 1 shows a perspective view of a trolley 1 according to an embodiment.

The trolley 1 is suitable for being wheeled up and down (in a direction A) an aisle of, for example, an airplane. The trolley 1 is also suitable for other uses, such as in trains, vessels or hospitals. Trolleys for use in an airplane comply with the strict airplane safety regulations known to the skilled person.

The trolley 1 is usually of narrow design, i.e. the ratio of the height to the width of the service trolley is relatively large. This ratio is, for example, between 2 and 6, such as approximately 4.

The trolley 1 comprises a plurality of casters 3, in this case four casters 3. By means of the casters 3, the trolley 1 can be moved and manoeuvred in a simple manner. Pedals (not shown) may be provided to lock the casters 3. A housing 5 rests on the casters 3.

The housing 5 comprises a bottom wall 7, which is substantially rectangular. The housing 5 also has two upright side walls 9, 10, each of which extends along a long side of the bottom wall 7 up to a top edge 11. Each bottom edge of the side walls 9, 10 is connected to in each case one long outer edge of the bottom wall 7. The housing 5 furthermore comprises a top wall 12, which is fitted between the upright side walls 9, 10.

The housing 5 has an access opening, as well as a door 18 which is connected to the housing 5 by at least one hinge 20 so as to be pivotable between an open position and a closed position. The hinge 20 determines a pivot axis PA for pivoting the door 18. The access opening being at least partially clear in the open position of the door 18 and the access opening being at least partially closed off by the door 18 in the closed position of the door 18. The door 18 is lockable relative to the housing 5 in its closed position as will be explained in more detail below.

Also, a second door 18 may be provided on the opposite side of the trolley (i.e. on the rear of the trolley 1).

Usually, in a position of use of the device 1, the pivot axis PA runs substantially according to a vertical. The opening and closing of the door 18 is in accordance with EP1858367 already discussed above, i.e. the door 18 has to be lifted in the direction of the pivot axis PA in order to unlock and open it. The door, in its unlocked position, being lifted relative to its locked position. In its closed position, the door is pre-stressed toward the locked position by the effect of the force of gravity, so that the door has to be lifted during a displacement from the locked position to the unlocked position against the action of the force of gravity. If no further outside forces are exerted on the device, the door remains locked, which is important from the point of view of safety.

In order to facilitate operation of the door 18, it is preferable that the door 18 is provided with a handle 87 for lifting the door.

As has been described above, the door 18 is connected along a hinge edge 181 of the door 18 by hinges 20 to a door post 91 of one of the side walls 9. At the opposite side of the hinge edge 181 is a locking edge 182 of the door 18 which locks with a door post 101 of one of the side walls 10. The locking edge 182 and the door post 101 engage with each other in a way which will be explained in more detail below with reference to Fig.'s 3a - 3c. First, the hinges 20 will be explained in more detail with reference to Fig.'s 2a and 2b.

The hinges 20 of the door 18 determine at least one pivot axis PA for the door 18. If the trolley 1 rests on a floor with the casters 3, this pivot axis PA runs vertically relative to this floor. The door 18 can be pivoted about its pivot axis PA between an open position and a closed position. In the open position, an access opening is partially cleared by the door 18, i.e. the interior of the housing 5 is accessible via the access opening. In the closed position of the door 18, the access opening is partially closed off by the door 18.

The door 18 is displaceable in a direction which runs substantially parallel to the pivot axis PA. The displaceability of the door 18 is achieved by means of a degree of clearance in the hinges 20. An embodiment of such hinges is shown in more detail in Fig.'s 2a and 2b.

Each hinge 20 comprises two hinge parts 61, 62. The first hinge part 61 is attached to the side wall 9 of the housing 5, while the second hinge part 62 is connected to the door 18. Each of the hinge parts 61, 62 comprises one hinge pin 64 and 65, respectively. The hinge pin 65 of the hinge part 62 attached to the door 18 is longer than the hinge pin 64 of the hinge part 61 attached to the housing 5. The hinge pins 64, 65 are delimited on both their ends by stop surfaces of the respective hinge parts 61, 62.

The hinge 20 furthermore comprises a flat sleeve 67 which surrounds both hinge pins 64, 65. The sleeve 67 is rotatably retained between the stop surfaces of the hinge part 61 attached to the housing 5. The hinge pin 65 of the hinge part 62 attached to the door 18 is longer than the sleeve 67. The hinge pin 65 can be displaced within the sleeve 67. Therefore, the door 18 can move up and down relative to the housing 5. This movement is limited by the stop surfaces of the hinge part 62 connected to the door 18.

In this manner, the hinges 20 have a clearance in the direction of the pivot axis PA, which during normal use substantially coincides with the vertical. Consequently, the door can be displaced in the vertical direction.

Moreover, the door 18 can be pivoted to such a degree by means of the hinges 20 that the door 18 comes to lie flat against the side wall 9. Of course, the hinges 20 shown in Fig.'s 2a - 2b are just an example of hinges 20 with a clearance in the direction of the pivot axis PA. Other hinges 20 can be conceived for obtaining the same functionality.

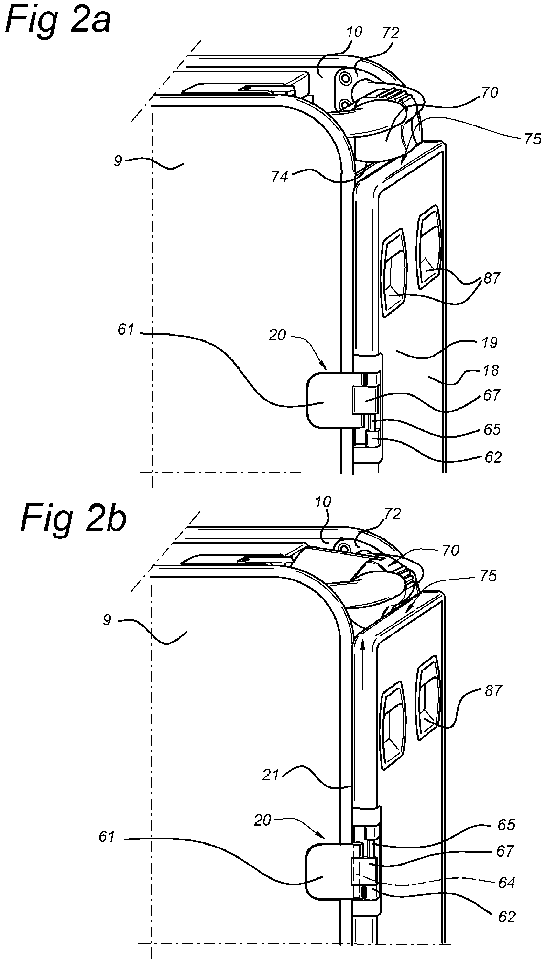

The door 18 shown in Fig. 2a is in the closed position and in the locked state. The upper stop surface of the hinge part 62 attached to the door 18 then bears against the sleeve 67. In the closed position, the door 18 can be displaced between a locked position and an unlocked position. In the locked position, the door 18 is locked relative to the housing 5. From the locked position (closed position), the door 18 can be lifted slightly into the unlocked position, in which the door 18 can be pivoted about the pivot axis PA.

One or more handles 87 may be situated on the outside of the door 18. The handle 87 facilitates the lifting of the door 18.

The device 1 may comprise one or more doors 18 of similar design. In the locked position, the force of gravity counteracts a displacement of the doors 18 from this position. In the case of external forces acting on the door panels, for example as a result of the trolley 1 being hit or as a result of turbulence, one or more door panels 18 could inadvertently be released from the locked position. Therefore, a stop body 70 is provided.

The stop body 70 is pushed onto a push rod 72 which is arranged between the side walls 9, 10 above the top wall 12. The stop body 70 can be displaced between a securing position shown in Fig. 2a and a releasing position shown in Fig. 2b. In the securing position, the bottom surface 74 of the stop body 70 rests against a top edge 75 of the door 18. In this position, the stop body 70 prevents an upward displacement of the door 18. In the releasing position (see Fig. 2b), the bottom surface 74 of the stop body 70 is pivoted inward about the push rod 72. As a result, the door 18 can be lifted out of the locked position and into the unlocked position.

Also, reference is made to EP1858367 for the locking and unlocking of the door 18, the functioning of the hinges 20 and the stop body 70.

According to an embodiment there is thus provided a device 1 for accommodating objects, in particular for use in an airplane, comprising a housing 5 which has an access opening, as well as a door 18 which is connected to the housing 5 by at least one hinge 20 so as to be pivotable between an open position and a closed position, which hinge 20 defines at least one pivot axis PA for pivoting the door 18, the access opening being at least partially clear in the open position of the door 18 and the access opening being at least partially closed off by the door 18 in the closed position of the door 18, and the door 18 being lockable relative to the housing 5 in its closed position, wherein the door 18, in its closed position, is movable in a direction which extends substantially parallel to the pivot axis PA between a locked position and an unlocked position, the door 18, in its locked position, being locked relative to the housing 5, and the door 18, in its unlocked position, being pivotable about the pivot axis PA. As already indicated above, the door 18 comprises a locking edge 182 which is arranged to lock with a door post 101 of the side wall 10.

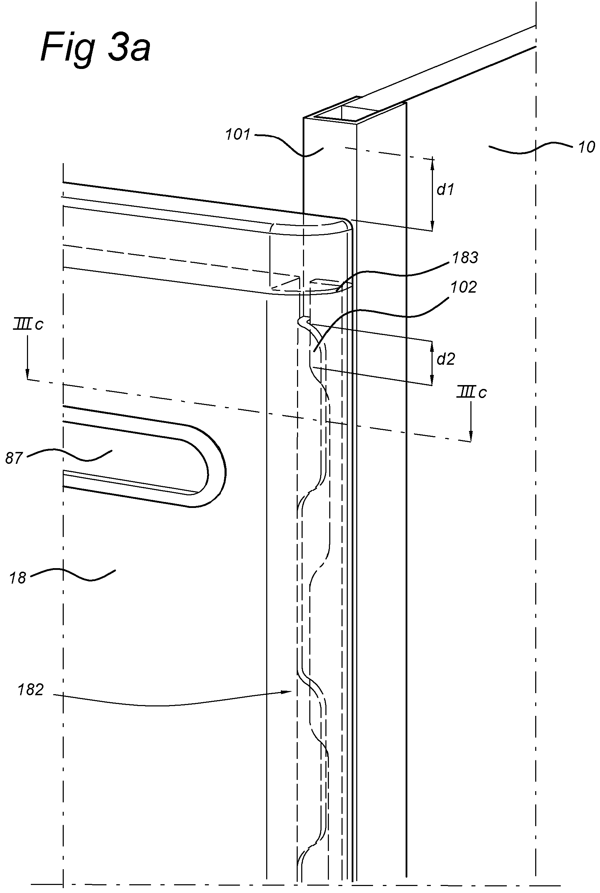

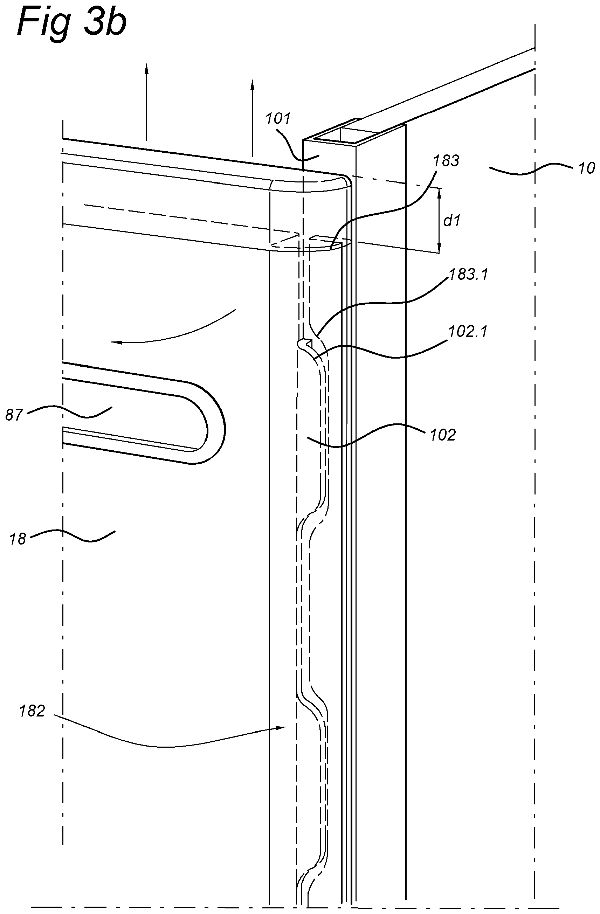

Next, with reference to Fig.'s 3a - 3c, the locking edge 182 of the door 18 and the door post 101 are explained in more detail below. Fig. 3a schematically depicts part of a device 1 as described above, in the closed and locked position. Fig. 3b schematically depicts part of a device 1 as described above, in the closed and unlocked position. As can be seen, in Fig. 3b the door 18 is lifted over an unlocking distance d1 with respect to the position shown in Fig. 3a.

The door 18 comprises a number of protrusions or engagement members 183 which are distributed over the locking edge 182 of the door 18. The door post 101 is also provided with a number of protrusions or engagement members 102 distributed over the door post 101.

As shown in Fig. 3a, the engagement members 183 of the door 18 engage or lock with respective engagement members 102 of the door post 101 to prevent the door from 18 opening. The engagement members 183 of the door 18 and the engagement members 102 of the door post 101 allow movement of the door between the locked and the unlocked position and are positioned whit an offset with respect to each other such that the door 18 can be opened when the door 18 is in the unlocked position. Respective engagement members engage over an engaging distance d2, which is equal to or preferably smaller than the unlocking distance d1.

The engagement members 102, 183 may be integrally formed with the door 18 and the side wall 10 respectively and are static, i.e. do not comprise any moving parts. The engagement members 102, 183 are preferably distributed over the entire length of the door post 101 and locking edge 182.

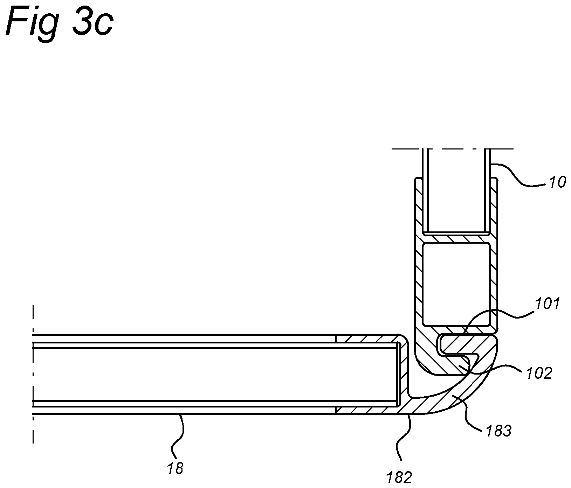

Fig. 3c schematically shows a cross section of Fig. 3a, as indicated in Fig. 3a by references IIIc-IIIc. As can be seen, the engagement members 102 of the door post 101 and the engagement members 183 of the door 18 are formed as engaging or interlocking hook members, i.e. hook-shaped protrusions. In Fig. 3c, according to the invention, the engagement members 102 of the door post 101 have a hook direction which is in a counterclockwise direction, while the engagement members 183 of the door 18 have a hook direction which is in a clockwise direction. In general, the hook direction of the engagement members 183 of the door 18 are opposite to the hook direction of the respective engagement members 102 of the door post 101 to which it engages.

The functioning of the device 1 is as follows. To open the door 18, a user lifts the door 18 over the unlocking distance d1 using the handle 87. As a result, the engagement members of the door 18 and the door post 101 no longer overlap/engage each other, and the user may open the door 18 by pulling the door 18 towards it open position using handle 87. To close the door 18, the user simply pushes the door 18 to its closed position.

Lower edges of the engagement members 102 of the door 18 and/or top edges of the engagement members of the door post 101 may be slanting or chamfered to facilitate lifting the door 18 when closing the door 18. The lower edges of the engagement members 102 of the door 18 may be upwardly slanting in a direction towards the door post 101, while the top edges of the engagement members 183 of the locking edge 182 may be downwardly slanting in a direction towards the door 18 to the upward movement of the door 18 needed to close the door. The slanting is not shown in the Figures.

## Claims

1. A device (1) for accommodating objects, the device being for use in a transportation means for transporting a plurality of passengers, the device comprising a housing (5) and a door (18) which is pivotable about a pivot axis (PA) between an open position and a closed position,
the door (18), in its closed position, being movable in a direction which extends substantially parallel to the pivot axis (PA) between a locked position and an unlocked position, the door (18), in its locked position, being locked in the closed position, and the door (18), in its unlocked position, being pivotable about the pivot axis (PA) from the closed to the open position,
the door (18) comprising a locking edge (182) and the housing (5) comprises a door post (101), the locking edge (182) engaging with the door post (101) in the locked position to lock the door in its closed position and to allow movement of the door (18) between the locked and the unlocked position in the direction which extends substantially parallel to the pivot axis (PA), the locking edge (182) comprising a plurality of engagement members (183) and the door post (101) comprises a plurality of engagement members (102) which engage with respective engagement members (183) of the locking edge (182) in the locked position, and lower edges (102.1) of the engagement members (102) of the door (18) and/or top edges (183.1) of the engagement members of the door post (101) being slanted to facilitate closing of the door (18),
**characterised in that** the engagement members (102) of the door post (101) are formed by hook-shaped protrusions and have a hook direction which is in a counterclockwise direction, while the engagement members (183) of the door (18) are formed by hook-shaped protrusions and have a hook direction which is in a clockwise direction,
the hook directions being both in the same plane, such that the oppositely directed hook-shaped protrusions engage, the plane in which the hook directions are positioned being substantially perpendicular to the pivot axis (PA).

2. Device (1) according to claim 1, wherein the plurality of engagement members (183) of the locking edge (182) and the plurality of engagement members (102) of the door post (101) engage with each other in a direction substantially perpendicular to the pivot axis (PA).

3. Device (1) according to any one of the preceding claims, wherein the plurality of engagement members (102) of the door post (101) do not engage with respective engagement members (183) of the locking edge (182) in the unlocked position.

4. Device (1) according to any one of the preceding claims, wherein the plurality of engagement members (102) of the door post (101) and the engagement members (183) of the locking edge (182) are static engagement members (102, 183).

5. Device (1) according to any one of the preceding claims, wherein the door (18) is moveable between the locked position and the unlocked position in the direction which extends substantially parallel to the pivot axis (PA) over an unlocking distance (dl),
and wherein, in the locked position, the plurality of engagement members (183) of the locking edge (182) engage with respective engagement members (102) of the door post (101) along respective engagement distances (d2) in the direction which extends substantially parallel to the pivot axis (PA), the engagement distances (d2) being smaller than the unlocking distances (d1).

6. Device (1) according to any one of the preceding claims, wherein the plurality of engagement members (183) of the locking edge (182) and the plurality of engagement members (102) of the door post (101) are distributed along the length of the locking edge (182) and door post (101) respectively.

7. Device (1) according to any one of the preceding claims, wherein the plurality of engagement members (102, 183) of the door (18) and the door post (101) are formed by protrusions that are alternatingly positioned in the direction of the pivot axis (PA) in the unlocked position and are at least partially overlapping in the direction of the pivot axis (PA) in the locked position.

8. Device (1) according to any one of the preceding claims, wherein the plurality of engagement members (102, 183) of the door (18) and the door post (101) are formed by hook-shaped protrusions, wherein the hook direction of the engagement members (183) of the door (18) are opposite to the hook direction of the engagement members (102) of the door post (101).

9. Device (1) according to any one of the preceding claims, wherein the locking edge (182) comprises a plurality of equally spaced protrusions (183) and the door post (101) comprises a plurality of equally spaced protrusions (102), wherein the protrusions (183) of the locking edge (182) engage with the protrusions (102) of the door post (101) in the locked position to lock the door in its closed position and allow movement of the door (18) in the direction which extends substantially parallel to the pivot axis (PA) between the locked and the unlocked position.

10. Device (1) according to any one of the preceding claims, wherein the device (1) is a trolley.

11. Galley for use in an airplane, comprising at least one device according to any one of the claims 1 - 9.

12. Transportation means for transporting a plurality of passengers, comprising at least one device for accommodating objects according to any one of the claims 1 - 9.

## Patentansprüche

1. Vorrichtung (1) zum Aufnehmen von Gegenständen, wobei die Vorrichtung zur Verwendung in einem Transportmittel zum Transportieren einer Vielzahl von Passagieren dient, wobei die Vorrichtung ein Gehäuse (5) und eine Tür (18) umfasst, die um eine Schwenkachse (PA) dazwischen und einer offenen Position und einer geschlossenen Position schwenkbar ist,
wobei die Tür (18) in ihrer geschlossenen Position in einer Richtung beweglich ist, die sich im Wesentlichen parallel zur Schwenkachse (PA) zwischen einer verriegelten Position und einer entriegelten Position erstreckt, wobei die Tür (18) in ihrer verriegelten Position in der geschlossenen Position verriegelt ist und die Tür (18) in ihrer entriegelten Position um die Schwenkachse (PA) von der geschlossenen Position zu der offenen Position schwenkbar ist;
wobei die Tür (18) eine Verriegelungskante (182) umfasst und das Gehäuse (5) einen Türpfosten (101) umfasst, wobei die Verriegelungskante (182) in der verriegelten Position mit dem Türpfosten (101) in Eingriff steht, um die Tür in ihrer geschlossenen Position zu verriegeln und um eine Bewegung der Tür (18) zwischen der verriegelten und der entriegelten Position in der Richtung zu ermöglichen, die sich im Wesentlichen parallel zur Schwenkachse (PA) erstreckt, wobei die Verriegelungskante (182) eine Vielzahl von Eingriffselementen (183) umfasst und der Türpfosten (101) eine Vielzahl von Eingriffselementen (102) umfasst, die mit den jeweiligen Eingriffselementen (183) der Verriegelungskante (182) in der verriegelten Position in Eingriff stehen, und untere Kanten (102.1) der Eingriffselemente (102) der Tür (18) und/oder obere Kanten (183.1) der Eingriffselemente des Türpfostens (101) geneigt sind, um das Schließen der Tür (18) zu erleichtern;
**dadurch gekennzeichnet, dass** die Eingriffselemente (102) des Türpfostens (101) durch hakenförmige Vorsprünge ausgebildet sind und eine Hakenrichtung aufweisen, die gegen den Uhrzeigersinn verläuft, während die Eingriffselemente (183) der Tür (18) durch hakenförmige Vorsprünge ausgebildet sind und eine Hakenrichtung aufweisen, die im Uhrzeigersinn verläuft,
wobei die Hakenrichtungen beide auf derselben Ebene liegen, so dass die entgegengesetzt gerichteten hakenförmigen Vorsprünge miteinander in Eingriff kommen, wobei die Ebene, in der die Hakenrichtungen positioniert sind, im Wesentlichen senkrecht zur Schwenkachse (PA) verläuft.

2. Vorrichtung (1) nach Anspruch 1, wobei die Vielzahl von Eingriffselementen (183) der Verriegelungskante (182) und die Vielzahl von Eingriffselementen (102) des Türpfostens (101) in einer im Wesentlichen senkrechten Richtung zur Schwenkachse (PA) miteinander in Eingriff kommen.

3. Vorrichtung (1) nach einem der vorstehenden Ansprüche, wobei die Vielzahl von Eingriffselementen (102) des Türpfostens (101) in der entriegelten Position nicht mit den jeweiligen Eingriffselementen (183) der Verriegelungskante (182) in Eingriff steht.

4. Vorrichtung (1) nach einem der vorstehenden Ansprüche, wobei die Vielzahl von Eingriffselementen (102) des Türpfostens (101) und die Eingriffselemente (183) der Verriegelungskante (182) statische Eingriffselemente (102, 183) sind.

5. Vorrichtung (1) nach einem der vorstehenden Ansprüche, wobei die Tür (18) zwischen der verriegelten Position und der entriegelten Position in der Richtung beweglich ist, die sich über einen Entriegelungsabstand (d1) im Wesentlichen parallel zur Schwenkachse (PA) erstreckt,
und wobei in der verriegelten Position die Vielzahl von Eingriffselementen (183) der Verriegelungskante (182) mit den jeweiligen Eingriffselementen (102) des Türpfostens (101) entlang der jeweiligen Eingriffsabstände (d2) in der Richtung miteinander in Eingriff kommen, die im Wesentlichen parallel zur Schwenkachse (PA) verläuft, wobei die Eingriffsabstände (d2) kleiner sind als die Entriegelungsabstände (d1).

6. Vorrichtung (1) nach einem der vorstehenden Ansprüche, wobei die Vielzahl von Eingriffselementen (183) der Verriegelungskante (182) und die Vielzahl von Eingriffselementen (102) des Türpfostens (101) entlang der Länge der Verriegelungskante (182) bzw. des Türpfostens (101) verteilt sind.

7. Vorrichtung (1) nach einem der vorstehenden Ansprüche, wobei die Vielzahl von Eingriffselementen (102, 183) der Tür (18) und des Türpfostens (101) durch Vorsprünge gebildet sind, die abwechselnd in der Richtung der Schwenkachse (PA) in der entriegelten Position positioniert sind und sich zumindest teilweise in Richtung der Schwenkachse (PA) in der verriegelten Position überschneiden.

8. Vorrichtung (1) nach einem der vorstehenden Ansprüche, wobei die Vielzahl von Eingriffselementen (102, 183) der Tür (18) und des Türpfostens (101) durch hakenförmige Vorsprünge gebildet sind, wobei die Hakenrichtung der Eingriffselemente (183) der Tür (18) der Hakenrichtung der Eingriffselemente (102) des Türpfostens (101) entgegengesetzt ist.

9. Vorrichtung (1) nach einem der vorhergehenden Ansprüche, wobei die Verriegelungskante (182) eine Vielzahl von gleich beabstandeten Vorsprüngen (183) umfasst und der Türpfosten (101) eine Vielzahl von gleich beabstandeten Vorsprüngen (102) umfasst, wobei der Vorsprung (183) der Verriegelungskante (182) in der verriegelten Position in die Vorsprünge (102) des Türpfostens (101) eingreift, um die Tür in ihrer geschlossenen Position zu verriegeln und eine Bewegung der Tür (18) in der Richtung zu ermöglichen, die sich im Wesentlichen parallel zur Schwenkachse (PA) zwischen der verriegelten und der entriegelten Position erstreckt.

10. Vorrichtung (1) nach einem der vorstehenden Ansprüche, wobei die Vorrichtung (1) ein Transportwagen ist.

11. Transportwagen zur Verwendung in einem Flugzeug, umfassend mindestens eine Vorrichtung nach einem der Ansprüche 1 bis 9.

12. Transportmittel zum Transportieren einer Vielzahl von Passagieren, umfassend mindestens eine Vorrichtung zum Aufnehmen von Gegenständen nach einem der Ansprüche 1 bis 9.

## Revendications

1. Dispositif (1) pour loger des objets, le dispositif étant pour une utilisation dans un moyen de transport pour transporter une pluralité de passagers, le dispositif comprenant un logement (5) et une porte (18) qui peut pivoter autour d'un axe de pivotement (PA) entre une position ouverte et une position fermée,
la porte (18), dans sa position fermée, étant mobile dans une direction qui s'étend sensiblement parallèlement à l'axe de pivotement (PA) entre une position verrouillée et une position déverrouillée, la porte (18), dans sa position verrouillée, étant verrouillée dans la position fermée, et la porte (18), dans sa position déverrouillée, pouvant pivoter autour de l'axe de pivotement (PA) de la position fermée à la position ouverte,
la porte (18) comprenant un bord de verrouillage (182) et le logement (5) comprend un montant de porte (101), le bord de verrouillage (182) venant en prise avec le montant de porte (101) dans la position verrouillée pour verrouiller la porte dans sa position fermée et pour permettre le mouvement de la porte (18) entre la position verrouillée et déverrouillée dans la direction qui s'étend sensiblement parallèlement à l'axe de pivotement (PA), le bord de verrouillage (182) comprenant une pluralité d'éléments de mise en prise (183) et le montant de porte (101) comprend une pluralité d'éléments de mise en prise (102) qui viennent en prise avec les éléments de mise en prise (183) respectifs du bord de verrouillage (182) dans la position verrouillée, et les bords inférieurs (102.1) des éléments de mise en prise (102) de la porte (18) et/ou les bords supérieurs (183.1) des éléments de mise en prise du montant de porte (101) étant inclinés pour faciliter la fermeture de la porte (18),
**caractérisé en ce que** les éléments de mise en prise (102) du montant de porte (101) sont formés par des saillies en forme de crochet et présentent une direction de crochet qui est dans une direction antihoraire, tandis que les éléments de mise en prise (183) de la porte (18) sont formés par des saillies en forme de crochet et présentent une direction de crochet qui est dans une direction horaire,
les directions de crochet étant toutes deux dans le même plan, de telle manière que des saillies en forme de crochet de directions opposées viennent en prise, le plan dans lequel les directions de crochet sont positionnées étant sensiblement perpendiculaire à l'axe de pivotement (PA).

2. Dispositif (1) selon la revendication 1, dans lequel la pluralité d'éléments de mise en prise (183) du bord de verrouillage (182) et la pluralité d'éléments de mise en prise (102) du montant de porte (101) viennent en prise l'une avec l'autre dans une direction sensiblement perpendiculaire à l'axe de pivotement (PA).

3. Dispositif (1) selon l'une quelconque des revendications précédentes, dans lequel la pluralité d'éléments de mise en prise (102) du montant de porte (101) ne viennent pas en prise avec les éléments de mise en prise (183) respectifs du bord de verrouillage (182) dans la position déverrouillée.

4. Dispositif (1) selon l'une quelconque des revendications précédentes, dans lequel la pluralité d'éléments de mise en prise (102) du montant de porte (101) et les éléments de mise en prise (183) du bord de verrouillage (182) sont des éléments de mise en prise (102, 183) statiques.

5. Dispositif (1) selon l'une quelconque des revendications précédentes, dans lequel la porte (18) est mobile entre la position verrouillée et la position déverrouillée dans la direction qui s'étend sensiblement parallèlement à l'axe de pivotement (PA) sur une distance de déverrouillage (d1),
et dans lequel, dans la position verrouillée, la pluralité d'éléments de mise en prise (183) du bord de verrouillage (182) viennent en prise avec les éléments de mise en prise (102) respectifs du montant de porte (101) le long de distances de mise en prise (d2) respectives dans la direction qui s'étend sensiblement parallèlement à l'axe de pivotement (PA), les distances de mise en prise (d2) étant plus petites que les distances de déverrouillage (d1).

6. Dispositif (1) selon l'une quelconque des revendications précédentes, dans lequel la pluralité d'éléments de mise en prise (183) du bord de verrouillage (182) et la pluralité d'éléments de mise en prise (102) du montant de porte (101) sont réparties le long de la longueur du bord de verrouillage (182) et du montant de porte (101) respectivement.

7. Dispositif (1) selon l'une quelconque des revendications précédentes, dans lequel la pluralité d'éléments de mise en prise (102, 183) de la porte (18) et du montant de porte (101) sont formés par des saillies qui sont positionnées de manière alternée dans la direction de l'axe de pivotement (PA) dans la position déverrouillée et sont au moins partiellement en chevauchement dans la direction de l'axe de pivotement (PA) dans la position verrouillée.

8. Dispositif (1) selon l'une quelconque des revendications précédentes, dans lequel la pluralité d'éléments de mise en prise (102, 183) de la porte (18) et du montant de porte (101) sont formés par des saillies en forme de crochet, dans lequel la direction de crochet des éléments de mise en prise (183) de la porte (18) est opposée à la direction de crochet des éléments de mise en prise (102) du montant de porte (101).

9. Dispositif (1) selon l'une quelconque des revendications précédentes, dans lequel le bord de verrouillage (182) comprend une pluralité de saillies (183) espacées de manière égale et le montant de porte (101) comprend une pluralité de saillies (102) espacées de manière égale, dans lequel les saillies (183) du bord de verrouillage (182) viennent en prise avec les saillies (102) du montant de porte (101) dans la position verrouillée pour verrouiller la porte dans sa position fermée et permettre le mouvement de la porte (18) dans la direction qui s'étend sensiblement parallèlement à l'axe de pivotement (PA) entre la position verrouillée et déverrouillée.

10. Dispositif (1) selon l'une quelconque des revendications précédentes, dans lequel le dispositif (1) est un chariot.

11. Office pour une utilisation dans un aéronef, comprenant au moins un dispositif selon l'une quelconque des revendications 1 à 9.

12. Moyen de transport pour transporter une pluralité de passagers, comprenant au moins un dispositif pour loger des objets selon l'une quelconque des revendications 1 à 9.
